(19) Europäisches Patentamt
European Patent Office
Office européen des brevets

(11) EP 3 552 920 A1

(12) EUROPÄISCHE PATENTANMELDUNG

(43) Veröffentlichungstag:
16.10.2019 Patentblatt 2019/42

(51) Int Cl.:
B61L 25/02 (2006.01)    B61L 3/00 (2006.01)

(21) Anmeldenummer: 19167751.7

(22) Anmeldetag: 08.04.2019

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 11.04.2018 DE 102018205423

(71) Anmelder: Siemens Mobility GmbH
81739 München (DE)

(72) Erfinder:
• Nourani-Vatani, Navid
12489 Berlin (DE)
• Palmer, Andrew
10965 Berlin (DE)

(54) DETEKTIEREN UND UNTERDRÜCKEN VON GLEIT- UND SCHLEUDERZUSTÄNDEN VON SCHIENENFAHRZEUGEN

(57) Es wird ein Verfahren zum Detektieren einer Gleit- oder Schleuderbewegung eines Rades (51) eines Schienenfahrzeugs (50) beschrieben. Bei dem Verfahren werden Drehzahlmesswerte (DMW) empfangen, welche an dem Rad (51) des Schienenfahrzeugs (50) sensoriell erfasst werden. Auf Basis der empfangenen Drehzahlmesswerte (DMW) wird ein Beschleunigungswert (BW) ermittelt. Zudem wird mindestens ein Referenzmesswert (RMW) empfangen, der über einen von dem Gleit- und Schleudervorgang des Rades nicht beeinflussten Messvorgang erfasst wird. Auf Basis des empfangenen mindestens einen Referenzmesswerts (RMW) wird ein Referenz-Beschleunigungswert (RBW) ermittelt. Schließlich wird auf Basis eines Vergleichs zwischen dem ermittelten Beschleunigungsmesswert (BW) und dem Referenz-Beschleunigungswert (RBW) ermittelt, ob eine Gleit- oder Schleuderbewegung des Rades (51) vorliegt. Es wird auch ein Verfahren zum Unterdrücken eines odometrischen Messfehlers eines Drehzahlmessgeräts (52) an einem Rad (51) eines Schienenfahrzeugs (50) beschrieben. Weiterhin wird eine Detektionsvorrichtung (30) beschrieben. Überdies wird eine Unterdrückungsvorrichtung (40) beschrieben. Außerdem wird ein Schienenfahrzeug (50) beschrieben.

FIG 1

EP 3 552 920 A1

**Beschreibung**

Die Erfindung betrifft ein Verfahren zum Detektieren einer Gleit- oder Schleuderbewegung eines Rades eines Schienenfahrzeugs. Weiterhin betrifft die Erfindung ein Verfahren zum Unterdrücken eines odometrischen Messfehlers eines Drehzahlmessgeräts an einem Rad eines Schienenfahrzeugs. Überdies betrifft die Erfindung eine Detektionsvorrichtung. Zudem betrifft die Erfindung eine Unterdrückungsvorrichtung. Schließlich betrifft die Erfindung ein Schienenfahrzeug.

Exakte Positions- und Geschwindigkeitsmessungen sind für einen sicheren Betrieb von Schienenfahrzeugen unerlässlich. Dies gilt besonders für autonom agierende Schienenfahrzeuge in der Zukunft. Üblicherweise verwenden Schienenfahrzeuge Drehzahlmessgeräte, um ihre aktuelle Geschwindigkeit zu messen. Die Position eines Schienenfahrzeugs wird dann durch Integration des Geschwindigkeitswerts zwischen Referenzpunkten auf der Schienenstrecke berechnet. Als Referenzpunkte werden meist Balisen verwendet. Ein Problem, das bei einer Anwendung von Drehzahlmessgeräten auftritt, besteht darin, dass diese anfällig auf Gleit- und Schleuderbewegungen des Schienenfahrzeugs reagieren, da sie an Antriebsrädern und an mit Bremsen versehenen Rädern positioniert sind. Wenn der Effekt aufgrund des Durchdrehens der Räder nicht detektiert und unterdrückt wird, wird die Geschwindigkeit des betreffenden Schienenfahrzeugs nicht korrekt ermittelt und dieser Fehler kann dazu führen, dass eine Position des Schienenfahrzeugs nicht korrekt ermittelt wird.

Übliche Verfahren zur Detektion von durchdrehenden oder rutschenden Rädern umfassen das Vergleichen der Geschwindigkeit des betreffenden Rades mit einer Referenzgeschwindigkeit, welche von einem Drehzahlmessgerät, der an einem Rad angeordnet ist, das weder angetrieben noch gebremst wird, geliefert wird. Alternativ kann eine Referenzgeschwindigkeit auch durch einen Sensor anderen Typs, beispielsweise ein Dopplergeschwindigkeitsradar, ermittelt werden. Eine andere Möglichkeit besteht darin, die Beschleunigung eines Drehzahlmessgeräts mit einem vorbestimmten Schwellwert zu vergleichen oder die Stromaufnahme eines Motors zu untersuchen.

Diese Herangehensweisen sind abhängig von der Verfügbarkeit mindestens eines Geschwindigkeitssensors, der durch Schlupf bzw. Gleiten und Schleudern nicht betroffen ist, oder es werden vorbestimmte Beschleunigungsschwellwerte genutzt, um festzustellen, ob ein Gleiten oder Schleudern an einem Rad auftritt. Falls jedoch alle Drehzahlmessgeräte an Rädern montiert sind, die möglicherweise von Gleiteffekten oder Schleudereffekten betroffen sind, kann eine korrekte Geschwindigkeit nicht zuverlässig ermittelt werden.

Bei vielen Fahrzeugen sind auch Werte der Stromstärke der Versorgungsleitungen der Motoren nicht für das betreffende Odometriesystem verfügbar oder zumindest nicht so leicht korrekt interpretierbar.

Schließlich sind Beschleunigungsschwellwerte, die verwendet werden, um das Auftreten eines Schleuder- oder Gleiteffekts zu ermitteln, schwierig in der Realität zu berechnen, da sie von vielen Faktoren, wie zum Beispiel der Steigung oder dem Gefälle der befahrenen Strecke, dem aktuellen Wetter, der Schienentraktion und der Last, die ein Schienenfahrzeug zieht, abhängig sind.

Es besteht also die Aufgabe, ein zuverlässigeres Verfahren und eine entsprechende Vorrichtung zur Detektion von Gleit- und Schleudereffekten anzugeben.

Diese Aufgabe wird durch ein Verfahren zum Detektieren einer Gleit- oder Schleuderbewegung eines Rades eines Schienenfahrzeugs gemäß Patentanspruch 1, ein Verfahren zum Unterdrücken eines odometrischen Messfehlers eines Drehzahlmessgeräts an einem Rad eines Schienenfahrzeugs gemäß Patentanspruch 10, eine Detektionsvorrichtung gemäß Patentanspruch 12, eine Unterdrückungsvorrichtung gemäß Patentanspruch 13 und ein Schienenfahrzeug gemäß Patentanspruch 14 gelöst.

Bei dem erfindungsgemäßen Verfahren zum Detektieren einer Gleit- oder Schleuderbewegung eines Rades eines Schienenfahrzeugs werden Drehzahlmesswerte empfangen, welche an dem Rad des Schienenfahrzeugs sensoriell erfasst werden. Die Drehzahlmesswerte können zum Beispiel durch ein an dem zu prüfenden Rad angeordnetes Drehzahlmessgerät übermittelt werden. Auf Basis der Drehzahlmesswerte werden Beschleunigungswerte ermittelt. Dies kann durch eine Berechnung der Geschwindigkeitsänderung auf Basis mehrerer erfasster Drehzahlmesswerte erfolgen.

Zudem wird mindestens ein Referenzmesswert empfangen, der über einen von dem Gleit- oder Schleudervorgang des Rades nicht beeinflussten Messvorgang erfasst wird. Beispielsweise wird ein Drehzahlmesswert von einem anderen, nicht angetriebenen und nicht abgebremsten Rad erfasst. Weiterhin wird ein Referenz-Beschleunigungswert auf Basis des erfassten mindestens einen Referenzmesswerts ermittelt.

Schließlich wird auf Basis eines Vergleichs zwischen dem ermittelten Beschleunigungsmesswert und dem Referenz-Beschleunigungswert ermittelt, ob eine Gleit- oder Schleuderbewegung des Rades vorliegt. Vorteilhaft können Sensormessergebnisse, welche für odometrische Zwecke genutzt werden, auf Zuverlässigkeit geprüft werden und damit wird die Verlässlichkeit von Positions- und Geschwindigkeitsermittlungen verbessert. Vorteilhaft können Messfehler bei Drehzahlmessungen an Rädern von Schienenfahrzeugen aufgrund von Gleit- oder Schleuderbewegungen auch bei schwierigen Bedingungen detektiert werden, bei denen eine Detektion allein durch einen Vergleich von Messwerten mit Schwellwerten nicht zuverlässig ist, da die Schwellwerte nicht ausreichend genau bestimmbar sind oder gar aufgrund sich ändernder Umweltbedingungen variabel sind.

Bei dem erfindungsgemäßen Verfahren zum Unterdrücken eines odometrischen Messfehlers eines Drehzahlmessgeräts an einem Rad eines Schienenfahrzeugs wird zunächst ermittelt, ob ein Gleiten oder Schleudern an dem Rad vorliegt. Dieser Vorgang erfolgt durch Anwenden des erfindungsgemäßen Verfahrens zum Detektieren einer Gleit- oder Schleuderbewegung eines Rades eines Schienenfahrzeugs. Anschließend werden Drehzahlmesswerte in Abhängigkeit davon verworfen, ob an dem Rad des Schienenfahrzeugs ein Gleiten oder Schleudern auftritt. Vorteilhaft werden nur zuverlässige Drehzahlmesswerte bei einer Geschwindigkeitsermittlung oder einer Positionsermittlung des Schienenfahrzeugs berücksichtigt, so dass die ermittelten odometrischen Werte zuverlässiger und genauer sind.

Die erfindungsgemäße Detektionsvorrichtung weist eine Eingangsschnittstelle auf. Die Eingangsschnittstelle ist dazu eingerichtet, Drehzahlmesswerte zu empfangen, welche an einem Rad eines Schienenfahrzeugs sensoriell erfasst werden. Teil der erfindungsgemäßen Detektionsvorrichtung ist auch eine Beschleunigungswert-Ermittlungseinheit, welche dazu eingerichtet ist, einen Beschleunigungswert auf Basis der erfassten Drehzahlmesswerte zu ermitteln. Die erfindungsgemäße Detektionsvorrichtung umfasst außerdem eine Referenz-Schnittstelle zum Empfangen eines Referenzmesswerts, welcher von einer Messeinheit zum Erfassen mindestens eines Referenzmesswerts über einen von dem Gleit- oder Schleudervorgang des Rades nicht beeinflussten Messvorgang erfasst wird. Überdies ist Teil der erfindungsgemäßen Detektionsvorrichtung auch eine Referenz-Beschleunigungswert-Ermittlungseinheit zum Ermitteln eines Referenz-Beschleunigungswerts auf Basis des erfassten mindestens einen Referenzmesswerts. Außerdem weist die erfindungsgemäße Detektionsvorrichtung eine Detektionseinheit auf. Die Detektionseinheit ist dazu eingerichtet, zu ermitteln, ob eine Gleit- oder Schleuderbewegung des Rades vorliegt. Diese Ermittlung erfolgt auf Basis eines Vergleichs zwischen dem ermittelten Beschleunigungswert und dem Referenz-Beschleunigungswert. Die erfindungsgemäße Detektionsvorrichtung teilt die Vorteile des erfindungsgemäßen Verfahrens zum Detektieren einer Gleit- oder Schleuderbewegung eines Rades eines Schienenfahrzeugs.

Die erfindungsgemäße Unterdrückungsvorrichtung weist eine erfindungsgemäße Detektionsvorrichtung auf. Teil der erfindungsgemäßen Unterdrückungsvorrichtung ist auch eine Unterdrückungseinheit zum Verwerfen von Drehzahlmesswerten in Abhängigkeit davon, ob an einem Rad eines Schienenfahrzeugs, welches von der Detektionsvorrichtung überwacht wird, ein Gleiten oder Schleudern ermittelt wurde. Die erfindungsgemäße Unterdrückungsvorrichtung teilt die Vorteile des erfindungsgemäßen Verfahrens zum Unterdrücken eines odometrischen Messfehlers eines Drehzahlmessgeräts an einem Rad eines Schienenfahrzeugs.

Das erfindungsgemäße Schienenfahrzeug weist die erfindungsgemäße Detektionsvorrichtung auf. Das erfindungsgemäße Schienenfahrzeug teilt die Vorteile der erfindungsgemäßen Detektionsvorrichtung.

Teile der erfindungsgemäßen Detektionsvorrichtung und der erfindungsgemäßen Unterdrückungsvorrichtung können zum überwiegenden Teil in Form von Softwarekomponenten ausgebildet sein. Dies betrifft insbesondere Teile der Beschleunigungswert-Ermittlungseinheit, der Referenz-Beschleunigungswert-Ermittlungseinheit und der Detektionseinheit. Grundsätzlich können diese Komponenten aber auch zum Teil, insbesondere wenn es um besonders schnelle Berechnungen geht, in Form von softwareunterstützter Hardware, beispielsweise FPGAs oder dergleichen, realisiert sein. Ebenso können die benötigten Schnittstellen, beispielsweise wenn es nur um eine Übernahme von Daten aus anderen Softwarekomponenten geht, als Softwareschnittstellen ausgebildet sein. Sie können aber auch als hardwaremäßig aufgebaute Schnittstellen ausgebildet sein, die durch geeignete Software angesteuert werden.

Eine teilweise softwaremäßige Realisierung hat den Vorteil, dass auch schon bisher in Schienenfahrzeugen genutzte Rechnersysteme auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung eines solchen Rechnersystems ladbar ist, mit Programmabschnitten, um alle Schritte des Verfahrens zum Detektieren einer Gleit- oder Schleuderbewegung eines Rades eines Schienenfahrzeugs auszuführen, wenn das Computerprogramm in dem Rechnersystem ausgeführt wird.

Ein solches Computerprogrammprodukt kann neben dem Computerprogramm gegebenenfalls zusätzliche Bestandteile, wie z.B. eine Dokumentation und/oder zusätzliche Komponenten, auch Hardware-Komponenten, wie z.B. Hardware-Schlüssel (Dongles etc.) zur Nutzung der Software, umfassen

Zum Transport zur Speichereinrichtung des Rechnersystems und/oder zur Speicherung an dem Rechnersystem kann ein computerlesbares Medium, beispielsweise ein Memorystick, eine Festplatte oder ein sonstiger transportabler oder fest eingebauter Datenträger dienen, auf welchem die von einer Rechnereinheit einlesbaren und ausführbaren Programmabschnitte des Computerprogramms gespeichert sind. Die Rechnereinheit kann z.B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung auch die verschiedenen Merkmale unterschiedlicher Ausführungsbeispiele und Ansprüche auch zu neuen Ausführungsbeispielen kombiniert werden.

In einer bevorzugten Ausgestaltung des erfindungsgemäßen Verfahrens zum Detektieren einer Gleit- oder Schleuderbewegung eines Rades eines Schienenfahrzeugs wird als Referenzmesswert ein Referenz-Beschleunigungswert mit einem linearen Beschleunigungsmessgerät, welches in Richtung der Longitudinalachse des Schienenfahrzeugs orientiert ist, gemessen. Vorteilhaft basiert die Beschleunigungsmessung bei dieser Variante auf einer völlig anderen Messart als die Drehzahlmessung des zu prüfenden Rades. Mithin kann eine Korrelation von Messfehlern bei den unterschiedlichen Messungen ausgeschlossen werden. Auf diese Weise wird eine besonders zuverlässige Detektion von Messfehlern aufgrund einer Gleit- oder Schleuderbewegung erreicht werden.

In einer Ausgestaltung des erfindungsgemäßen Verfahrens zum Detektieren einer Gleit- oder Schleuderbewegung eines Rades eines Schienenfahrzeugs werden eine Mehrzahl von Referenzmesswerten von einer Mehrzahl von kinetischen Sensoren des Schienenfahrzeugs erfasst und es wird der Referenz-Beschleunigungswert durch Verarbeiten der Mehrzahl von Referenzmesswerten mit einem Kalman-Filter ermittelt. Mit Hilfe eines Kalman-Filters können eine Mehrzahl von Messwerten zu einem gemeinsamen Messwert kombiniert werden. Einzelne Fehlmessungen können mit Hilfe einer Sensor-Konsens-Analyse bei einem Ensemble von unterschiedlichen Messungen leicht ausgesondert bzw. unterdrückt werden, so dass insgesamt eine zuverlässige und konsistente Referenzwertmessung erreicht wird. Auf diese Weise wird eine robustere Messung eines Referenzmesswerts erzielt. Dies funktioniert, solange zumindest die Messwerte eines Teils der Sensoren nicht durch Gleiten oder Schleudern beeinträchtigt sind. Der Filtervorgang kann zum Beispiel in Kombination mit einer Sensor-Konsens-Analyse, wie sie in der deutschen Patentanmeldung mit dem amtlichen Aktenzeichen 10 2018 202 976.8 beschrieben ist, erfolgen. Mit Hilfe der Sensor-Konsens-Analyse kann der Einfluss des Gleitens und Schleuderns auf die Referenzmesswerte stark reduziert werden.

In einer Ausgestaltung des erfindungsgemäßen Verfahrens zum Detektieren einer Gleit- oder Schleuderbewegung eines Rades eines Schienenfahrzeugs umfasst das Erfassen der Mehrzahl von Referenzmesswerten ein Erfassen von Referenzdrehzahlmesswerten an mindestens einem anderen Rad als dem, an dem eine mögliche Gleit- oder Schleuderbewegung detektiert werden soll. Vorteilhaft können vorhandene Drehzahlmessgeräte an Rädern, die möglicherweise nicht von der Gleit- oder Schleuderbewegung betroffen sind, genutzt werden, um zuverlässige Referenzmesswerte zu erhalten.

In einer vorteilhaften Variante des erfindungsgemäßen Verfahrens zum Detektieren einer Gleit- oder Schleuderbewegung eines Rades eines Schienenfahrzeugs wird die Mehrzahl von Referenzmesswerten einer Konsensanalyse unterworfen, bevor sie von dem Kalman-Filter verarbeitet werden. Vorteilhaft können mit Hilfe einer Konsensanalyse fehlerhafte Messwerte, die möglicherweise selbst durch eine Gleit- oder Schleuderbewegung beeinflusst werden, entsprechend gering gewichtet werden, so dass ein zuverlässiger Referenzmesswert erzielt wird.

Bevorzugt wird bei dem Vergleich eine mittlere Differenz einer Normalverteilung des Referenz-Beschleunigungswertes zu einem vorbestimmten Schwellwert ermittelt. Diese Vorgehensweise ist besonders einfach praktikabel und erfordert minimalen Rechenaufwand.

Alternativ kann auch bei dem Vergleich ein z-Test mit einer vorbestimmten Wahrscheinlichkeitsschwelle durchgeführt werden und ein z-Wert wie folgt berechnet werden:

$$z = \frac{\mu_s - \mu_r}{\sigma_s^2 - \sigma_r^2} \ ,$$

wobei $\mu_s$ der Mittelwert der Normalverteilung des Beschleunigungswerts ist, $\mu_r$ der Mittelwert der Normalverteilung des Referenz-Beschleunigungswerts ist, $\sigma_s^2$ die Varianz der Normalverteilung des Beschleunigungswerts ist und $\sigma_r^2$ die Varianz der Normalverteilung des Referenz-Beschleunigungswertes ist. Bei dieser Variante können vorteilhaft Wahrscheinlichkeitswerte für die Zuverlässigkeit von Messwerten bei dem Vergleich mitberücksichtigt werden.

Der berechnete z-Wert wird mit einem z-Wert verglichen, der auf Basis einer benutzerspezifizierten Wahrscheinlichkeit berechnet wurde. Solche Werte werden beispielsweise anhand von Tabellen ermittelt, wie sie in http://users.stat.ufl.edu/~athienit/Tables/Ztable.pdf beschrieben sind. Ein solcher z-Test weist den Vorteil auf, dass mit ihm statistisch bedingte Unsicherheiten gemessener Beschleunigungswerte berücksichtigt werden.

Ein Ermitteln, ob ein Gleiten oder ein Schleudern vorliegt, kann in Abhängigkeit davon erfolgen, ob bei dem Vergleich ein negativer Vergleichswert oder ein positiver Vergleichswert ermittelt wird.

Ein Gleitverhalten wird immer dann als gegeben ermittelt, falls bei dem Vergleich ein höherer Beschleunigungswert für das Rad des Schienenfahrzeugs ermittelt wird als für den Referenz-Beschleunigungswert, und ein Schleudern wird ermittelt, wenn bei dem Vergleich ein niedrigerer Beschleunigungswert für das Rad des Schienenfahrzeugs als für den Referenz-Beschleunigungswert ermittelt wird. Vorteilhaft kann das Beschleunigungs- und Bremsverhalten an die unterschiedlichen auftretenden Phänomene angepasst werden.

In einer Variante des erfindungsgemäßen Verfahrens zum Unterdrücken eines odometrischen Messfehlers eines Drehzahlmessgeräts an einem Rad eines Schienenfahrzeugs werden die Drehzahlmesswerte nicht mehr verworfen, wenn ein Vergleich zwischen dem Beschleunigungswert und dem Referenz-Beschleunigungswert das Ergebnis aufweist, dass keine Gleit- oder Schleuderbewegung mehr auftritt. Beispielsweise unterschreitet eine Differenz aus dem Beschleunigungswert und dem Referenz-Beschleunigungswert einen vorbestimmten Schwellwert. Dabei kann der vorbestimmte Schwellwert von dem Schwellwert, welcher genutzt wird, um bei einem Überschreiten des Schwellwerts ein Unterdrücken von Drehzahlmesswerten einzuleiten, unterschiedlich sein. Er kann aber auch identisch mit diesem sein.

In einer Ausgestaltung des erfindungsgemäßen Verfahrens zum Detektieren einer Gleit- oder Schleuderbewegung eines Rades eines Schienenfahrzeugs werden die Drehzahlmesswerte nicht mehr verworfen, wenn an dem Rad des Schienenfahrzeugs ein Gleiten oder Schleudern für ein vorbestimmtes Zeitintervall nicht mehr auftritt. Vorteilhaft wird bei dieser Variante ein Verarbeiten von beeinträchtigten Messdaten durch das Warten um ein zusätzliches Zeitintervall mit größerer Sicherheit vermieden. Insbesondere wird ein fehlerhaftes Reagieren auf zufallsbedingtes Rauschen unterdrückt.

Die Erfindung wird im Folgenden unter Hinweis auf die beigefügten Figuren anhand von Ausführungsbeispielen noch einmal näher erläutert. Es zeigen:

FIG 1　ein Flussdiagramm, welches ein Verfahren zum Detektieren einer Gleit- oder Schleuderbewegung eines Rades eines Schienenfahrzeugs gemäß einem Ausführungsbeispiel der Erfindung veranschaulicht,

FIG 2　ein Flussdiagramm, welches ein Verfahren zum Unterdrücken eines odometrischen Messfehlers eines Drehzahlmessgeräts an einem Rad eines Schienenfahrzeugs gemäß einem Ausführungsbeispiel der Erfindung veranschaulicht,

FIG 3　eine schematische Darstellung einer Detektionsvorrichtung gemäß einem Ausführungsbeispiel der Erfindung,

FIG 4　eine schematische Darstellung einer Unterdrückungsvorrichtung gemäß einem Ausführungsbeispiel der Erfindung,

FIG 5　eine schematische Darstellung eines Schienenfahrzeugs gemäß einem Ausführungsbeispiel der Erfindung.

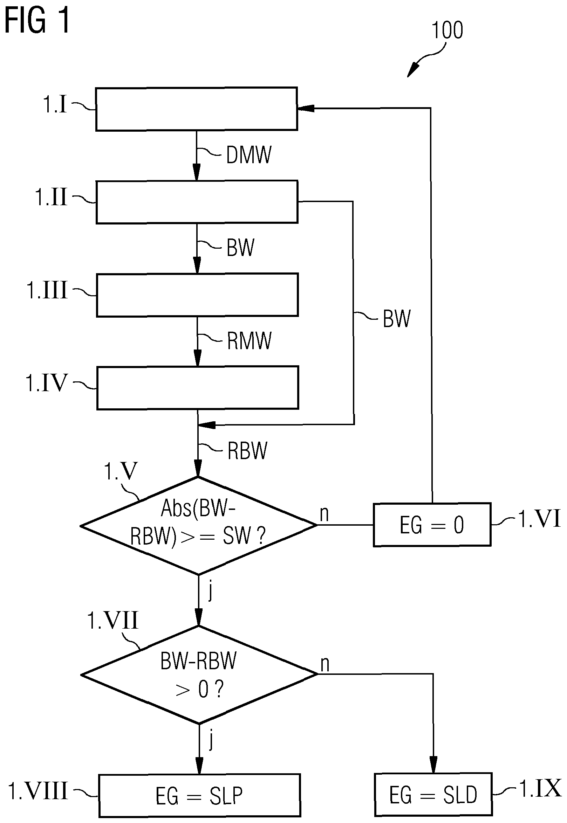

In FIG 1 ist ein Flussdiagramm 100 gezeigt, welches ein Verfahren zum Detektieren einer Gleit- oder Schleuderbewegung eines Rades eines Schienenfahrzeugs gemäß einem Ausführungsbeispiel der Erfindung veranschaulicht.

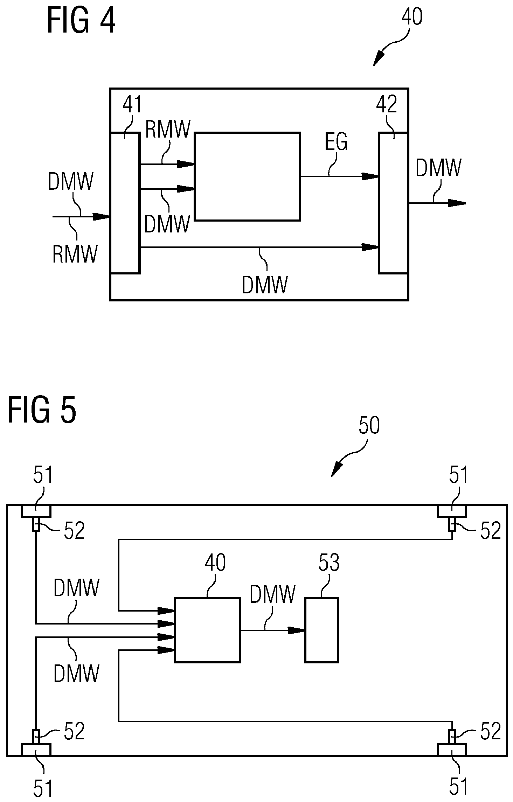

Bei dem Schritt 1.I werden zunächst Drehzahlmesswerte DMW von einem Drehzahlsensor (siehe FIG 5), auch Drehzahlmessgerät genannt, empfangen, der an einem Rad eines Schienenfahrzeugs (siehe FIG 5) angeordnet ist und eine Drehzahl des Rades misst. Auf Basis der empfangenen Drehzahlmesswerte DMW wird bei dem Schritt 1.II ein Beschleunigungswert BW ermittelt. Weiterhin werden bei dem Schritt 1.III mit Hilfe einer Vielzahl von Radsensoren Referenz-Messwerte RMW gemessen, die als Referenzmesswerte RMW Drehzahlmesswerte umfassen. Bei dem Schritt 1.IV wird dann auf Basis der Drehzahlmesswerte RMW ein Referenz-Beschleunigungswert RBW ermittelt. Um den störenden Effekt einzelner abweichender Referenzmesswerte RMW zu reduzieren, werden die Referenzmesswerte RMW zunächst mit Hilfe einer Sensor-Konsens-Analyse, wie sie in der deutschen Patentanmeldung mit dem Aktenzeichen 10 2018 202 976.8 beschrieben ist, harmonisiert. Die Ermittlung des Referenz-Beschleunigungswertes RBW erfolgt dann mit Hilfe eines Kalman-Filters. Mit Hilfe des Kalman-Filters werden stark abweichende Ausreißer-Messwerte unterdrückt und eine Fusion der Messwerte von unterschiedlichen Sensoren wird erreicht.

Anschließend erfolgt bei dem Schritt 1.V ein Vergleich des Beschleunigungswerts BW mit dem Referenz-Beschleunigungswert RBW. In dem in FIG 1 gezeigten Ausführungsbeispiel erfolgt ein Vergleich eines Absolutwerts einer gemittelten Differenz zwischen dem ermittelten Beschleunigungswert BW und dem Referenz-Beschleunigungswert RBW mit einem vorbestimmten Schwellwert SW. Wird der Schwellwert SW nicht überschritten, was in FIG 1 mit "n" gekennzeichnet ist, so wird zu dem Schritt 1.VI übergegangen, bei dem als Ergebnis EG festgelegt wird, dass kein Gleiten und Schleudern für das überprüfte Rad des Schienenfahrzeugs auftritt, was in FIG 1 mit dem Ergebniswert "0" symbolisiert ist. Anschließend wird in diesem Fall zu dem Schritt 1.I zurückgekehrt und erneut werden Drehzahlmesswerte DMW eingelesen.

Wird dagegen bei dem Schritt 1.V ermittelt, dass der vorbestimmte Schwellwert SW überschritten wurde, was in FIG 1 mit "j" gekennzeichnet ist, ist damit die Information verknüpft, dass ein Gleit- oder Schleudervorgang vorliegt. Dann wird zu dem Schritt 1.VII übergegangen, bei dem geprüft wird, ob die bei dem Schritt 1.V geprüfte und gemittelte Differenz zwischen dem ermittelten Beschleunigungswert BW und dem Referenz-Beschleunigungswert RBW einen positive Wert aufweist. Ist das der Fall, was in FIG 1 mit "j" gekennzeichnet ist, so wird zu dem Schritt 1.VIII übergegangen. Bei dem Schritt 1.VIII wird auf der Grundlage, dass bei dem Schritt 1.VII ein positiver Wert ermittelt wurde, als Ergebnis EG festgelegt, dass ein Gleitvorgang SLP auftritt. Wird dagegen bei dem Schritt 1.VII ermittelt, dass die gemittelte Differenz zwischen dem ermittelten Beschleunigungswert BW und dem Referenz-Beschleunigungswert RBW einen negativen Wert aufweist, was in FIG 1 mit "n" gekennzeichnet ist, so wird zu dem Schritt 1.IX übergegangen. Bei dem Schritt 1.IX wird als Ergebnis EG festgelegt, dass ein Schleudervorgang SLD auftritt.

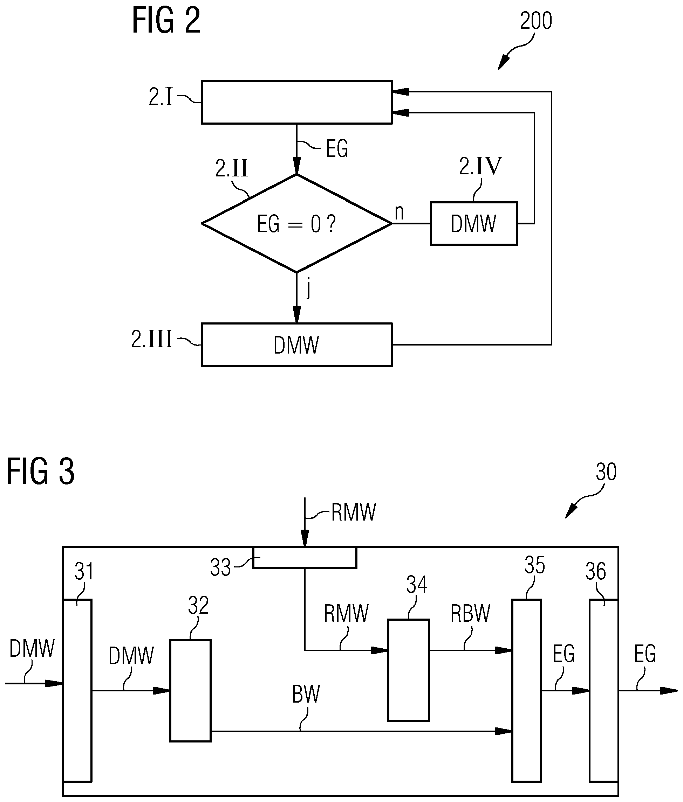

In FIG 2 ist ein Flussdiagramm 200 gezeigt, welches ein Verfahren zum Unterdrücken eines odometrischen Messfehlers eines Drehzahlmessgeräts an einem Rad eines Schienenfahrzeugs gemäß einem Ausführungsbeispiel der Erfindung veranschaulicht. Bei dem Schritt 2.I wird ein Verfahren zum Detektieren einer Gleit- oder Schleuderbewegung eines Rades eines Schienenfahrzeugs, wie es zum Beispiel in FIG 1 veranschaulicht ist, durchgeführt. Anschließend wird bei dem Schritt 2.II ermittelt, ob das Ergebnis EG des bei dem Schritt 2.I durchgeführten Verfahrens einen Gleit- oder Schleudervorgang anzeigt oder nicht. Ist kein solcher Vorgang bei dem Schritt 2.I ermittelt worden, was in FIG 2 mit "j" gekennzeichnet ist, so wird zu dem Schritt 2.III übergegangen und die bei dem Verfahren zum Detektieren einer Gleit- oder Schleuderbewegung eines Rades eines Schienenfahrzeugs bei dem Schritt 2.I geprüften Drehzahlmesswerte DMW werden bei dem Schritt 2.III ausgegeben. Beispielsweise erfolgt eine Weitergabe an eine Steuerungseinrichtung oder eine Auswertungseinrichtung, welche auf Basis der als zuverlässig eingestuften Drehzahlmesswerte DMW eine Geschwindigkeit v oder eine Position P des Schienenfahrzeugs ermittelt.

Anschließend wird zu dem Schritt 2.I zurückgegangen und das Überprüfen der Drehzahlmesswerte wird fortgesetzt. Falls dagegen bei dem Schritt 2.II ermittelt wird, dass das Ergebnis EG des bei dem Schritt 2.I durchgeführten Verfahrens einen Gleit- oder Schleudervorgang aufweist, was in FIG 2 mit "n" gekennzeichnet ist, so wird zu dem Schritt 2.IV übergegangen, bei dem die geprüften Drehzahlmesswerte DMW unterdrückt werden. Nachfolgend wird zu dem Schritt 2.I zurückgekehrt, bei dem das Verfahren zum Detektieren einer Gleit- oder Schleuderbewegung eines Rades eines Schienenfahrzeugs erneut ausgeführt wird. Das Unterdrücken der erfassten Drehzahlmesswerte DMW wird erst dann beendet, wenn bei dem Schritt 2.II als Ergebnis EG des bei dem Schritt 2.I durchgeführten Verfahrens festgestellt wird, dass kein Gleiten oder Schleudern mehr auftritt. In diesem Fall wird zu dem Schritt 2.III übergegangen und es werden die aktuellen Drehzahlmesswerte DMW ausgegeben.

In FIG 3 ist eine Detektionsvorrichtung 30 gemäß einem Ausführungsbeispiel der Erfindung schematisch veranschaulicht. Die Detektionsvorrichtung 30 kann zum Beispiel von einem Schienenfahrzeug umfasst sein. Die Detektionsvorrichtung 30 weist eine Eingangsschnittstelle 31 zum Erfassen von Drehzahlmesswerten DMW von einer Drehzahlmesseinheit (nicht gezeigt) zum sensoriellen Erfassen von Drehzahlmesswerten DMW an einem Rad eines Schienenfahrzeugs auf. Die erfassten Drehzahlmesswerte DMW werden an eine Beschleunigungswert-Ermittlungseinheit 32 übermittelt, die ebenfalls Teil der Detektionsvorrichtung 30 ist. Die Beschleunigungswert-Ermittlungseinheit 32 ist dazu eingerichtet, einen Beschleunigungswert BW auf Basis der erfassten Drehzahlmesswerte DMW zu ermitteln.

Der ermittelte Beschleunigungswert BW wird an eine ebenfalls von der Detektionsvorrichtung 30 umfasste Detektionseinheit 35 übermittelt. Teil der erfindungsgemäßen Detektionsvorrichtung 30 ist auch eine Referenzmesswert-Eingangsschnittstelle 33. Die Referenzmesswert- Eingangsschnittstelle 33 dient dazu, mehrere Referenzmesswerte RMW, welche durch einen von dem Gleit- oder Schleudervorgang des Rades nicht beeinflussten Messvorgang erfasst werden, zu empfangen.

Beispielsweise werden von allen Rädern eines Schienenfahrzeugs Drehzahlmesswerte RMW als Referenzmesswerte RMW erfasst. Die empfangenen Referenzmesswerte RMW werden dann an die bereits genannte Referenz-Beschleunigungswert-Ermittlungseinheit 34 übermittelt. Die Referenz-Beschleunigungswert-Ermittlungseinheit 34 ist dazu eingerichtet, einen Referenz-Beschleunigungswert RBW auf Basis der empfangenen erfassten Referenzmesswerte RMW zu ermitteln. Dieser Vorgang erfolgt bei dem in FIG 3 gezeigten Ausführungsbeispiel durch die Anwendung eines Kalman-Filters auf die Referenzmesswerte RMW. Der von der Referenz-Beschleunigungswert-Ermittlungseinheit 34 erzeugte Referenz-Beschleunigungswert RBW wird an die bereits erwähnte Detektionseinheit 35 übermittelt, die ebenfalls Teil der Detektionsvorrichtung 30 ist. Zusätzlich erhält die Detektionseinheit 35 auch den Beschleunigungswert BW, welcher von der Beschleunigungswert-Ermittlungseinheit 32 erzeugt wurde. Die Detektionseinheit 35 ist dazu eingerichtet, zu ermitteln, ob eine Gleit- oder Schleuderbewegung des Rades vorliegt. Dieser Vorgang erfolgt auf Basis eines Vergleichs zwischen dem ermittelten Beschleunigungswert BW und dem Referenz-Beschleunigungswert RBW. Das von der Detektionseinheit 35 ermittelte Detektionsergebnis EG wird anschließend über eine Ausgangsschnittstelle 36 ausgegeben.

In FIG 4 ist eine Unterdrückungsvorrichtung 40, die Teil eines Schienenfahrzeugs sein kann, gemäß einem Ausführungsbeispiel der Erfindung schematisch dargestellt. Die Unterdrückungsvorrichtung 40 weist eine Eingangsschnittstelle 41 auf, welche Drehzahlmesswerte DMW von einem Drehzahlmessgerät, welches an einem Rad eines Schienenfahrzeugs angeordnet ist, empfängt. Weiterhin empfängt die Eingangsschnittstelle 41 auch Referenzmesswerte RMW. Die empfangenen Drehzahlmesswerte DMW und Referenzmesswerte RMW werden an eine von der Unterdrückungsvorrichtung 40 umfasste Detektionsvorrichtung 30 übermittelt, welche ein Detektionsergebnis EG an eine Unterdrückungseinheit 42, die ebenfalls Teil der Unterdrückungsvorrichtung ist, ausgibt. Die Unterdrückungseinheit 42 verwirft die von der Eingangsschnittstelle 41 empfangenen Drehzahlmesswerte DMW für den Fall, dass sie als Ergebnis EG die Information erhalten hat, dass bei dem geprüften Rad ein Gleit- oder Schleudervorgang auftritt. Erhält die Unterdrückungseinheit 42 dagegen die Information über die Ergebnisdaten EG, dass kein Gleit- oder Schleudervorgang auftritt, so lässt die Unterdrückungseinheit 42 die Drehzahlmesswerte DMW passieren.

In FIG 5 ist ein Schienenfahrzeug 50 gemäß einem Ausführungsbeispiel der Erfindung schematisch dargestellt. Das Schienenfahrzeug 50 weist insgesamt vier Räder 51 auf (nur der Einfachheit halber ist die Zahl der Räder auf vier Räder beschränkt). An den vier Rädern 51 sind jeweils Sensoren 52, auch Drehzahlmessgeräte genannt, angeordnet. Die Sensoren 52 ermitteln Drehzahlmesswerte DMW an den Rädern 51 und über mitteln diese Drehzahlmesswerte DMW an eine Unterdrückungsvorrichtung 40 mit dem in FIG 4 gezeigten Aufbau. Die Unterdrückungseinrichtung 40 übermittelt nur zuverlässige Drehzahlmesswerte DMW weiter an eine Steuereinrichtung 53. Die Steuereinrichtung 53 ermittelt auf Basis der empfangenen Drehzahlmesswerte DMW eine Position des Schienenfahrzeugs 50 und eine Geschwindigkeit des Schienenfahrzeugs 50. Diese Daten können dann zum Beispiel einem Fahrer in einem Führerstand des Schienenfahrzeugs 50 angezeigt werden.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

**Patentansprüche**

1. Verfahren zum Detektieren einer Gleit- oder Schleuderbewegung eines Rades (51) eines Schienenfahrzeugs (50), aufweisend die Schritte:

   - Empfangen von Drehzahlmesswerten (DMW), welche an dem Rad (51) des Schienenfahrzeugs (50) sensoriell erfasst werden,
   - Ermitteln eines Beschleunigungswertes (BW) auf Basis der erfassten Drehzahlmesswerte (DMW),
   - Empfangen mindestens eines Referenzmesswerts (RMW), der über einen von dem Gleit- und Schleudervorgang des Rades (51) nicht beeinflussten Messvorgang erfasst wird,
   - Ermitteln eines Referenz-Beschleunigungswertes (RBW) auf Basis des erfassten mindestens einen Referenzmesswerts (RMW),
   - Ermitteln, ob eine Gleit- oder Schleuderbewegung des Rades (51) vorliegt, auf Basis eines Vergleichs zwischen dem ermittelten Beschleunigungsmesswert (BW) und dem Referenz-Beschleunigungswert (RBW).

2. Verfahren nach Anspruch 1, wobei als Referenzmesswert (RMW) ein Referenz-Beschleunigungswert (RBW) mit einem linearen Beschleunigungsmessgerät, welches in Richtung der Longitudinalachse des Schienenfahrzeugs (50) orientiert ist, gemessen wird.

3. Verfahren nach Anspruch 1 oder 2, wobei

   - eine Mehrzahl von Referenzmesswerten (RMW) von einer Mehrzahl von kinetischen Sensoren des Schienenfahrzeugs (50) erfasst werden und
   - der Referenz-Beschleunigungswert (RBW) durch Verarbeiten der Mehrzahl von Referenzmesswerten (RMW) mit einem Kalman-Filter ermittelt wird.

4. Verfahren nach Anspruch 3, wobei das Erfassen der Mehrzahl von Referenzmesswerten (RMW) ein Erfassen von Referenzdrehzahlmesswerten an mindestens einem anderen Rad (51) als dem, an dem eine mögliche Gleit- oder Schleuderbewegung detektiert werden soll, umfasst.

5. Verfahren nach Anspruch 3 oder 4, wobei die Mehrzahl von Referenzmesswerten (RMW) einer Konsensanalyse unterworfen werden, bevor sie von dem Kalman-Filter verarbeitet werden.

6. Verfahren nach einem der vorstehenden Ansprüche, wobei bei dem Vergleich eine mittlere Differenz einer Normalverteilung des Referenz-Beschleunigungswertes (RBW) zu einem vorbestimmten Schwellwert (SW) ermittelt wird.

7. Verfahren nach einem der vorstehenden Ansprüche, wobei bei dem Vergleich ein z-Test mit einer vorbestimmten Wahrscheinlichkeitsschwelle durchgeführt wird und ein z-Wert wie folgt berechnet wird:

$$z = \frac{\mu_s - \mu_r}{\sigma_s^2 - \sigma_r^2} \ ,$$

wobei $\mu_s$ der Mittelwert der Normalverteilung des Beschleunigungswertes (BW) ist, $\mu_r$ der Mittelwert der Normalverteilung des Referenz-Beschleunigungswerts (RBW) ist, $\sigma_s^2$ die Varianz der Normalverteilung des Beschleunigungswerts (BW) ist und $\sigma_r^2$ die Varianz der Normalverteilung des Referenz-Beschleunigungswertes (RBW) ist.

8. Verfahren nach einem der vorstehenden Ansprüche, wobei ermittelt wird, ob ein Gleiten oder ein Schleudern vorliegt, in Abhängigkeit davon, ob bei dem Vergleich ein negativer Vergleichswert oder ein positiver Vergleichswert ermittelt wird.

9. Verfahren nach Anspruch 8, wobei ein Gleitverhalten ermittelt wird, falls bei dem Vergleich ein höherer Beschleunigungswert für das Rad (51) des Schienenfahrzeugs (50) ermittelt wird als für den Referenz-Beschleunigungswert (RBW) und ein Schleudern ermittelt wird, falls bei dem Vergleich ein niedrigerer Beschleunigungswert (BW) für das Rad (51) des Schienenfahrzeugs (50) als für den Referenz-Beschleunigungswert (RBW) ermittelt wird.

10. Verfahren zum Unterdrücken eines odometrischen Messfehlers eines Drehzahlmessgeräts (52) an einem Rad (51) eines Schienenfahrzeugs (50), aufweisend:

    - Ermitteln, ob ein Gleiten oder Schleudern an dem Rad (51) vorliegt, durch Anwenden des Verfahrens nach einem der Ansprüche 1 bis 9,
    - Verwerfen der Drehzahlmesswerte (DMW) in Abhängigkeit davon, ob an dem Rad (51) des Schienenfahrzeugs (50) ein Gleiten oder Schleudern auftritt.

11. Verfahren nach Anspruch 10, wobei die Drehzahlmesswerte (DMW) nicht mehr verworfen werden, wenn an dem Rad (51) des Schienenfahrzeugs (50) ein Gleiten oder Schleudern für ein vorbestimmtes Zeitintervall nicht mehr auftritt.

12. Detektionsvorrichtung (30), aufweisend:

    - eine Eingangsschnittstelle (31) zum Empfangen von Drehzahlmesswerten (DMW), welche an einem Rad (51) eines Schienenfahrzeugs (50) sensoriell erfasst werden,
    - eine Beschleunigungswert-Ermittlungseinheit (32) zum Ermitteln eines Beschleunigungswertes (BW) auf Basis der erfassten Drehzahlmesswerte (DMW),
    - eine Referenzmesswert-Eingangsschnittstelle (33) zum Empfangen mindestens eines Referenzmesswerts (RMW), welcher über einen von dem Gleit- oder Schleudervorgang des Rades (51) nicht beeinflussten Messvorgang erfasst wird,
    - eine Referenz-Beschleunigungswert-Ermittlungseinheit (34) zum Ermitteln eines Referenz-Beschleunigungswertes (RBW) auf Basis des empfangenen mindestens einen Referenzmesswerts (RMW),
    - eine Detektionseinheit (35) zum Ermitteln, ob eine Gleit- oder Schleuderbewegung des Rades (51) vorliegt, auf Basis eines Vergleichs zwischen dem ermittelten Beschleunigungswert (BW) und dem Referenz-Beschleunigungswert (RBW).

13. Unterdrückungsvorrichtung (40), aufweisend:

    - eine Detektionsvorrichtung (30) nach Anspruch 12,
    - eine Unterdrückungseinheit (41) zum Verwerfen von Drehzahlmesswerten (DMW) in Abhängigkeit davon, ob an dem Rad (51) des Schienenfahrzeugs (50) ein Gleiten oder Schleudern auftritt.

14. Schienenfahrzeug (50), aufweisend eine Detektionsvorrichtung (30) nach Anspruch 12.

15. Computerprogrammprodukt mit einem Computerprogramm, welches direkt in eine Speichereinheit einer Steuereinrichtung eines Schienenfahrzeugs ladbar ist, mit Programmabschnitten, um alle Schritte eines Verfahrens nach einem der Ansprüche 1 bis 11 auszuführen, wenn das Computerprogramm in der Detektionsvorrichtung (30) ausgeführt wird.

16. Computerlesbares Medium, auf welchem von einer Rechnereinheit ausführbare Programmabschnitte gespeichert sind, um alle Schritte des Verfahrens nach einem der Ansprüche 1 bis 11 auszuführen, wenn die Programmabschnitte von der Rechnereinheit ausgeführt werden.

## FIG 1

100

1.I

DMW

1.II

BW

1.III

RMW

1.IV

BW

RBW

1.V

Abs(BW-
RBW) >= SW ?

n

EG = 0

1.VI

j

1.VII

BW-RBW
> 0 ?

n

j

1.VIII

EG = SLP

EG = SLD

1.IX

FIG 2

200

2.I

EG

2.II

EG = 0 ?    n    2.IV    DMW

j

2.III    DMW

FIG 3

30

RMW

33    RMW    34

31    RBW    35    36

DMW    DMW    32    EG    EG

BW

FIG 4

40

41    RMW                              42

DMW                      EG

DMW              DMW

RMW                      DMW

DMW

FIG 5

50

51                                              51

52                                              52

DMW        40        DMW        53

DMW

52                                              52

51                                              51

Europäisches
Patentamt

European
Patent Office

Office européen
des brevets

# EUROPÄISCHER RECHERCHENBERICHT

**Nummer der Anmeldung**

EP 19 16 7751

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2016/139580 A1 (THALES CANADA INC [CA]) 9. September 2016 (2016-09-09) | 1-3,5-16 | INV. B61L25/02 |
| Y | * Absätze [0032] - [0119]; Abbildung 6 * | 4 | |
| | ----- | | ADD. |
| X | US 3 398 994 A (SMITH ROBERT D) 27. August 1968 (1968-08-27) * Spalte 1, Zeile 1 - Spalte 6, Zeile 42; Abbildungen 1,2 * | 1,2,8,9, 12,14 | B61L3/00 |
| | ----- | | |
| X | EP 2 666 697 A1 (ALSTOM TRANSP TECH [FR]) 27. November 2013 (2013-11-27) * Absätze [0031] - [0035]; Abbildung 1 * | 1,2,8-16 | |
| | ----- | | |
| X | DE 10 2011 011443 A1 (VOITH PATENT GMBH [DE]) 16. August 2012 (2012-08-16) * Absätze [0008], [0022], [0027] * | 1,2,8,9, 12,14 | |
| | ----- | | |
| X | EP 0 078 655 A2 (WESTINGHOUSE BRAKE & SIGNAL [GB]) 11. Mai 1983 (1983-05-11) * Seite 2, Zeile 17 - Seite 6, Zeile 8 * | 1,2,8,9, 12,14 | |
| | ----- | | RECHERCHIERTE SACHGEBIETE (IPC) |
| Y | US 6 152 546 A (DAIGLE JEFFREY LOUIS [US]) 28. November 2000 (2000-11-28) * Spalte 4, Zeilen 11-15 * * Spalte 5, Zeilen 11-15 * | 4 | B61L B60L |
| | ----- | | |

Der vorliegende Recherchenbericht wurde für alle Patentansprüche erstellt

| Recherchenort | Abschlußdatum der Recherche | Prüfer |
|---|---|---|
| München | 14. August 2019 | Mäki-Mantila, M |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 16 7751

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-08-2019

| Im Recherchenbericht angeführtes Patentdokument | Datum der Veröffentlichung | Mitglied(er) der Patentfamilie | Datum der Veröffentlichung |
|---|---|---|---|
| WO 2016139580 A1 | 09-09-2016 | CA 2977730 A1<br>EP 3265361 A1<br>WO 2016139580 A1 | 09-09-2016<br>10-01-2018<br>09-09-2016 |
| US 3398994 A | 27-08-1968 | KEINE | |
| EP 2666697 A1 | 27-11-2013 | AU 2013206015 A1<br>EP 2666697 A1<br>FR 2991042 A1<br>RU 2013123955 A | 12-12-2013<br>27-11-2013<br>29-11-2013<br>27-11-2014 |
| DE 102011011443 A1 | 16-08-2012 | CN 103370253 A<br>DE 102011011443 A1<br>EP 2675688 A2<br>ES 2568631 T3<br>KR 20140012671 A<br>RU 2013138216 A<br>WO 2012110216 A2 | 23-10-2013<br>16-08-2012<br>25-12-2013<br>03-05-2016<br>03-02-2014<br>27-03-2015<br>23-08-2012 |
| EP 0078655 A2 | 11-05-1983 | AU 8983082 A<br>EP 0078655 A2<br>GB 2111151 A<br>JP S5889446 A<br>KR 840001899 A | 05-05-1983<br>11-05-1983<br>29-06-1983<br>27-05-1983<br>07-06-1984 |
| US 6152546 A | 28-11-2000 | US 6152546 A<br>US 6499815 B1 | 28-11-2000<br>31-12-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018202976